(19) **Europäisches Patentamt**

**European Patent Office**

**Office européen des brevets**

(11) **EP 1 458 213 B1**

(12) **FASCICULE DE BREVET EUROPEEN**

(45) Date de publication et mention
de la délivrance du brevet:
**21.06.2006 Bulletin 2006/25**

(51) Int Cl.:
*H04Q 7/38* (2006.01)

(21) Numéro de dépôt: **04290683.4**

(22) Date de dépôt: **12.03.2004**

(54) **Procédé d'allocation de ressources à un mobile**

Verfahren zum Resourcenzuteilung in einem Mobilen Endgerät

Method for resources allocation in a mobile terminal

(84) Etats contractants désignés:
**AT BE BG CH CY CZ DE DK EE ES FI FR GB GR
HU IE IT LI LU MC NL PL PT RO SE SI SK TR**

(30) Priorité: **12.03.2003 FR 0303076**

(43) Date de publication de la demande:
**15.09.2004 Bulletin 2004/38**

(73) Titulaire: **Bouygues Telecom
92100 Boulogne Billancourt (FR)**

(72) Inventeurs:
• **Lemoine, Vincent
75009 Paris (FR)**
• **Terrom, André
78124 Mareil-sur-Mauldre (FR)**

(74) Mandataire: **Callon de Lamarck, Jean-Robert et al
Cabinet Régimbeau
20, rue de Chazelles
75847 Paris cedex 17 (FR)**

(56) Documents cités:
WO-A-99/63713          WO-A-02/065666
GB-A- 2 369 003

• MALIK S A ET AL: "Resource allocation for
multimedia services on the UMTS downlink" ICC
2002. 2002 IEEE INTERNATIONAL CONFERENCE
ON COMMUNICATIONS. CONFERENCE
PROCEEDINGS. NEW YORK, NY, APRIL 28 - MAY
2, 2002, IEEE INTERNATIONAL CONFERENCE
ON COMMUNICATIONS, NEW YORK, NY: IEEE,
US, vol. 1 OF 5, 28 avril 2002 (2002-04-28), pages
3076-3080, XP010590042 ISBN: 0-7803-7400-2

**Description**

L'invention concerne l'allocation de ressources aux différents utilisateurs de la ressource radio dans un système de télécommunication cellulaire.

L'invention concerne plus particulièrement un mécanisme événementiel d'allocation de ressources aux différents utilisateurs de la ressource radio approprié à tout système de télécommunication cellulaire dans lequel le transfert de données s'effectue à l'aide de mémoires tampons chargées d'écouler les entités de trafic à destination des mobiles.

Le système de télécommunication est plus spécifiquement un système de télécommunication de troisième génération permettant de proposer aux usagers, partout et à tout moment, des services multimédias avec des qualités de services différentes (débit, taux d'erreurs, délais de transfert...) pour les différents types de médias (voix, audio, données...), notamment dans un réseau à noyau UMTS (Système de Télécommunication Mobile Universel ou, selon la terminologie anglo-saxonne, Universal Mobile Telecommunication System).

Les services offerts par l'UMTS peuvent être regroupés en quatre classes qui dépendent de la qualité de service (QoS) requise: « conversationnel », « en transit », « interactif » et « arrière-plan» (respectivement « conversational », « streaming », « interactive » et « background » selon la terminologie anglo-saxonne). Les classes sont généralement regroupées en deux groupes selon la sensibilité aux délais d'acheminement de l'information.

Les classes « conversationnel » et « en transit» correspondent à des applications dont les contraintes temps réel sont importantes. Ces classes sont par conséquent dénommées classes Temps Réel (Real Time selon la terminologie anglo-saxonne) (RT).

Les classes « interactif » et « arrière-plan » correspondent quant à elles à des applications moins dépendantes des délais dans la transmission et sont par conséquent dénommées classes Temps Non Réel (Non Real Time selon la terminologie anglo-saxonne) (NRT).

Allouer la ressource radio à l'ensemble des mobiles consiste à partager la puissance totale disponible et le nombre de codes disponibles sur l'ensemble des cellules d'un site particulier de telle sorte que chaque mobile dispose d'un couple code/puissance. L'allocation se doit d'être efficace afin que la qualité de service offerte aux utilisateurs soit la meilleure possible et cela quelque soit la densité de trafic et le type de service demandé.

En ce qui concerne les mobiles RT, les ressources, en code et en puissance, allouées à l'admission sont maintenues pendant toute la durée de la communication.

En ce qui concerne les mobiles NRT, l'allocation de ressources se fait selon un traitement événementiel c'est à dire que l'allocation de ressources à un mobile NRT est déclenchée sur demande (notamment lors d'une demande d'admission par un mobile NRT et également en cours de connexion lorsqu'un mobile NRT est en attente de données). L'allocation se doit d'être évolutive ; il faut effectivement « coller » au mieux aux besoins de chaque mobile NRT pour que l'utilisation de la ressource radio soit efficace.

Une mémoire tampon est associée à chaque mobile NRT. Elle contient les entités de trafic qui doivent être transmises vers le mobile qui lui est associée. Ces mémoires tampons « écoulent » les entités de trafic avec un certain débit qui peut varier dans le temps. Un mécanisme surveillant l'état vide ou non des mémoires tampons de transmission des entités de trafic à destination des mobiles NRT (c'est-à-dire l'attente ou non de données de la part des mobiles NRT) est classiquement mis en oeuvre. Ce mécanisme permet de faire varier les ressources utilisées par chaque mobile NRT de telle sorte que sa consommation est sensiblement adaptée à ces besoins effectifs.

Les ressources en code et en puissance peuvent ainsi être augmentées (on parle alors d'upgrading selon la terminologie anglo-saxonne) ou diminuées (on parle alors de downgrading selon la terminologie anglo-saxonne). Une diminution (respectivement une augmentation) consiste à allouer au mobile NRT un couple code/puissance dont le niveau est inférieur (respectivement supérieur) à celui qui lui était précédemment alloué.

Dans le cadre d'une diminution des ressources allouées à un mobile NRT, on passe classiquement au couple code/puissance de niveau de code directement inférieur à celui qui lui était précédemment alloué.

Dans le cadre d'une augmentation des ressources allouées à un mobile NRT, il est nécessaire de passer par un contrôle d'admission car l'allocation de ressources supplémentaires n'est pas garantie. On tente classiquement d'allouer le couple code/puissance de niveau directement supérieur. S'il ne reste pas assez de ressources disponibles, on maintient la ressource allouée (c'est-à-dire le même couple code/puissance).

Comme on l'a vu précédemment, le procédé classiquement mis en oeuvre dans le cadre de la stratégie événementielle d'allocation de ressources aux mobiles NRT est simplement basé sur l'analyse de l'état vide ou non de la mémoire tampon associée à chaque mobile NRT. Dès lors qu'une mémoire tampon associée à un mobile NRT est vide, un minuteur est enclenché. Si, avant l'expiration du minuteur, la mémoire tampon associée à un mobile NRT passe de l'état vide à l'état non vide suite à l'arrivée d'une nouvelle entité de trafic NRT à destination dudit mobile, le minuteur est arrêté et les ressources allouées au mobile sont maintenues à l'identique. En revanche, si aucune entité de trafic NRT ne vient faire passer la mémoire tampon de l'état vide à l'état non vide avant que le minuteur n'arrive à échéance, le mobile passe alors dans un état dans lequel il consomme moins de ressources ou dans un état dans lequel il est déconnecté et ne consomme aucune ressource.

Le procédé classique, tel que celui décrit dans WO 99/63713, ne permet donc pas d'adapter la consommation de ressources aux besoins réels, fluctuants au cours de la connexion, du mobile NRT. Par conséquent, son efficacité, en terme d'utilisation de la ressource radio, est limitée.

Il apparaît ainsi qu'il est nécessaire de disposer d'un procédé d'allocation des ressources radio à chaque mobile NRT qui soit plus efficace et qui tienne par conséquent compte de l'évolution du trafic. Il n'est par exemple pas souhaitable qu'un mobile NRT dont les besoins diminuent grandement dispose continûment au cours de la connexion de la liaison fortement consommatrice qui lui avait été allouée en début de connexion. Les ressources allouées à un mobile NRT doivent ainsi pouvoir être adaptées dynamiquement, c'est-à-dire être augmentées ou diminuées, en fonction de l'état effectif du débit du mobile NRT.

L'invention propose notamment une telle adaptation de la consommation (en terme de code et de puissance) de chaque mobile NRT à son besoin réel.

A cet effet, l'invention propose un procédé comme décrit dans la revendication 1.

L'invention propose ainsi un procédé efficace d'allocation dynamique des ressources radio aux mobiles NRT. Le procédé permet d'adapter efficacement la liaison radio d'un mobile NRT à ces besoins effectifs.

Avantageusement, l'analyse des besoins du mobile et la modification, le cas échéant, de l'allocation de ressources audit mobile sont réalisées périodiquement.

L'analyse des besoins du mobile à un instant $T_i=i*T$, T représentant la périodicité, avantageusement paramétrable, de l'analyse des besoins du mobile, comporte alors les étapes de :

- Calcul de la taille Li de la mémoire tampon associée au mobile en quantifiant le nombre d'entités de trafic qui y sont stockées audit instant $T_i$ ;
- Calcul de la durée $T_v$ de vidage de la mémoire tampon à débit constant égal au débit nominal du canal par :

$$T_v = \frac{Li}{debit\_no\min al\_du\_canal} \; ;$$

- Calcul d'une quantité Gi :

$$G_i = \frac{\sum_{j=0}^{N-1} L_{i-j}}{N} \; ;$$

où N représente la taille paramétrable de la fenêtre de calcul et $L_k$ la taille de la mémoire tampon à l'instant $T_k$ ;

- Calcul d'un pseudo-débit DebitIB$_i$ : $DebitIB, = G_i - G_{i-N}$.

Selon un mode de réalisation préféré de l'invention, l'allocation des ressources au mobile est diminuée si la durée $T_v$ est inférieure à une durée seuil $T_{vd}$ et si le pseudo-débit DebitIB$_i$ est inférieur à un débit seuil DebitIB$_d$.

Selon un mode de réalisation préféré de l'invention, l'allocation des ressources au mobile est augmentée, la durée $T_v$ étant supérieure à ladite durée seuil $T_{vd}$, si le pseudo-débit DebitIB$_i$, calculé à l'instant $T_i$ est supérieur à un débit seuil DebitIB$_a$, ou, si le pseudo-débit DebitIB$_i$, calculé à l'instant $T_i$ est inférieur au débit seuil DebitIB$_a$ et la durée $T_v$ est supérieure à une durée seuil $T_{va}$.

Afin d'augmenter les ressources allouées au mobile NRT, le mobile passe en contrôle d'admission, où on tente préférentiellement de lui attribuer un couple code/puissance de niveau de code supérieur et, s'il ne reste pas assez de ressources disponibles, on maintient le couple code/puissance précédemment alloué.

D'autres caractéristiques, buts et avantages de l'invention apparaîtront à la lecture de la description détaillée qui va suivre, et au regard de la figure annexée, donnée à titre d'exemple non limitatif et qui représente la décision périodique quant à l'opportunité de procéder à une modification des ressources qui sont allouées à un mobile NRT.

L'invention ne concerne que les mobiles dans un état connecté, les transitions vers d'autres états mettent en oeuvre des mécanismes qui ne sont pas présentés ici dans le cadre de l'invention.

Comme on l'a vu précédemment, l'invention propose d'effectuer continûment, tout au long de la connexion d'un mobile NRT, une adaptation de la ressource radio allouée audit mobile NRT en fonction des besoins effectifs dudit mobile.

L'invention consiste à analyser l'état de la mémoire tampon de transmission des entités de trafic NRT associée à chacun des mobiles NRT; à évaluer, en réponse à l'analyse précédente, les besoins effectifs de chacun desdits mobiles et à adapter la liaison de chacun desdits mobiles en fonction de leurs besoins effectifs.

L'invention comporte avantageusement les étapes suivantes :

- Analyse des besoins effectifs de chaque mobile NRT.
- Réallocation, le cas échéant, en fonction des besoins effectifs analysés à l'étape précédente, de ressources à chaque mobile NRT.

L'étape d'analyse des besoins effectifs de chaque mobile NRT peut avantageusement, mais non exclusivement, être réalisée, dans un premier temps, par le recensement de l'état de la mémoire tampon de transmission des entités de trafic NRT associée à chaque mobile NRT, c'est-à-dire par l'analyse de la quantité d'entités de trafic présentes dans ladite mémoire tampon et devant être écoulées à destination du mobile qui lui est associée, et dans un deuxième temps par l'estimation du débit à la source de chaque mobile NRT en calculant le débit écoulé notamment par intégration différentielle sur l'état de la mémoire tampon qui leur est associée.

Au cours de cette étape, l'état de la mémoire tampon associée à chaque mobile NRT est donc analysé. Connaissant cet état ainsi que son historique, il est alors possible d'analyser le débit écoulé, pendant une certaine durée, pour chaque mobile NRT.

Cette durée est liée à la taille N, avantageusement paramétrable, de la fenêtre de calcul retenue. La connaissance du débit écoulé pendant cette durée permet d'obtenir une estimation du débit à la source.

Bien entendu, l'invention n'est pas limitée au mode d'estimation du débit à la source présenté ci-après.

Selon le mode de réalisation préféré de l'invention, les étapes d'analyse des besoins effectifs de chaque mobile NRT et de réallocation, le cas échéant, en fonction des besoins effectifs analysés à l'étape précédente, de ressources à chaque mobile NRT sont réalisées périodiquement.

Avantageusement, le débit écoulé pour chacun des mobiles NRT est estimé en calculant les différentes grandeurs présentées ci-après. Ti étant l'instant tel que Ti=i*T, i étant un entier et T la durée entre deux analyses successives du débit de chaque mobile NRT, on calcule à l'instant Ti, pour chacun des mobiles NRT, la quantité suivante :

$$G_i = \frac{\sum_{j=0}^{N-1} L_{i-j}}{N}$$

où :

N représente la taille paramétrable de la fenêtre de calcul, et
Li la taille, à l'instant Ti, de la mémoire tampon associée à un mobile NRT.

La valeur $G_{i\text{-}N}$ calculée à l'instant $T_{i\text{-}N}$= (i-N)*T est ensuite utilisée. L'estimation du débit à la source s'obtient alors en calculant un pseudo débit donné par la formule suivante :

$$DebitIB_i = G_i - G_{i-N}$$

La valeur de ce pseudo-débit $DebitIB_i$ d'un mobile NRT correspond aux variations de l'état de la mémoire tampon associée audit mobile NRT pendant une durée correspondant à N périodes T. Le signe de ce pseudo-débit $DebitIB_i$ indique si la mémoire tampon associée à un mobile NRT est sensiblement en phase de remplissage (cas où $DebitIB_i$ est supérieur à zéro) ou sensiblement en phase de vidage (cas où $DebitIB_i$ est inférieur à zéro). La valeur absolue de $DebitIB_i$ renseigne quant à elle sensiblement sur la rapidité avec laquelle s'effectuent ces phases de remplissage ou de vidage de la mémoire tampon.

Le calcul périodique du pseudo-débit de chaque mobile NRT permet ainsi d'estimer à intervalles réguliers quels sont les besoins réels de chacun des mobiles NRT.

L'étape de réallocation périodique de ressources à un mobile NRT est réalisée, à intervalle régulier aux instants $T_i$, une fois l'étape d'analyse périodique des besoins effectifs dudit mobile NRT accomplie. Elle consiste principalement à décider périodiquement s'il est utile de procéder à une modification des ressources allouées à chaque mobile NRT et à procéder, le cas échéant, à ladite modification.

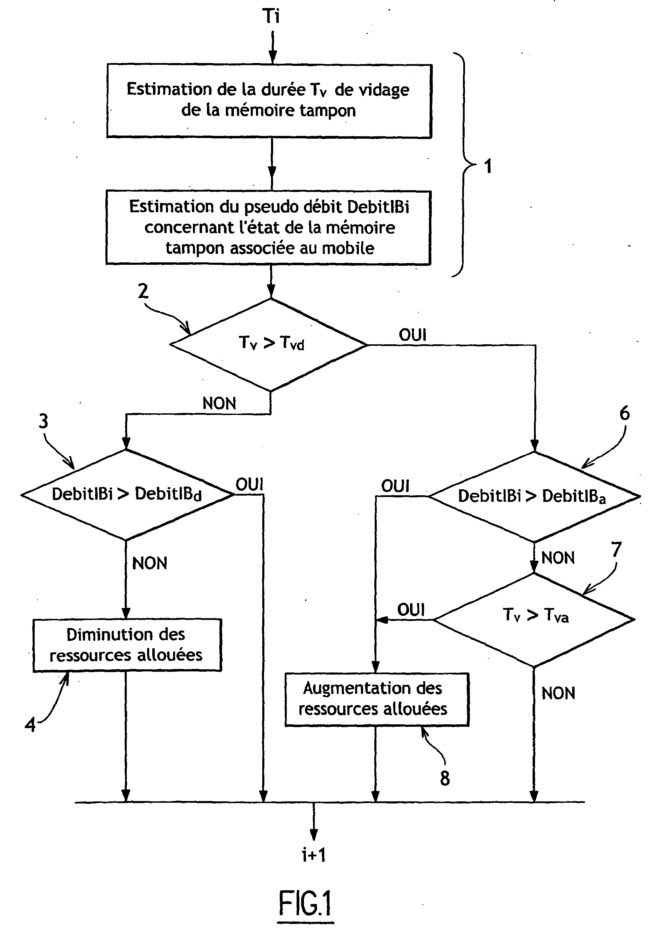

Selon un mode de réalisation préféré, illustré par la figure 1, la modification entreprise au cours de cette étape peut être une diminution des ressources allouées à chaque mobile NRT.

Chaque mobile NRT est soumis indépendamment au traitement de ladite étape périodique.

Au cours de l'étape 1, la durée qu'il serait nécessaire d'observer, à débit constant égal au débit nominal du canal, afin que les entités de trafic présentes à l'instant Ti dans la mémoire tampon soient toutes écoulées vers le mobile NRT est calculée. Cette durée $T_v$ correspond donc à la durée de vidage de la mémoire tampon et peut être avantageusement calculée par le rapport $T_v = \dfrac{Taille\_de\_la\_mémoire\_tampon}{debit\_no\min al\_du\_canal}$.

Plus cette durée $T_v$ est faible, plus il apparaît approprié de procéder à une diminution des ressources allouées au mobile NRT. En revanche plus la durée $T_v$ est importante, plus la mémoire tampon contient un nombre important d'entités de trafic à écouler vers le mobile, et plus il apparaît inapproprié de procéder à une diminution des ressources allouées audit mobile.

A cet effet, on compare, au cours de l'étape 2, la durée $T_v$ calculée précédemment à une durée seuil $T_{vd}$ de telle sorte que si $T_v$ est supérieure à $T_{vd}$ les ressources allouées au mobile NRT ne sont pas diminuées.

En revanche si $T_v$ est inférieure à $T_{vd}$, on compare ensuite, au cours de l'étape 3, la valeur du pseudo-débit du mobile NRT calculée précédemment à une valeur seuil $DebitIB_d$.

Si $DebitIB_i$ est supérieur à $DebitIB_d$, les ressources allouées au mobile NRT ne sont pas modifiées

En revanche si $DebitIB_i$ est inférieur à $DebitIB_d$, on dégrade alors la liaison au cours de l'étape 4 de diminution des ressources allouées au mobile. On diminue pour cela les ressources allouées au mobile NRT en passant au couple code/puissance de niveau de code immédiatement inférieur à celui précédemment alloué.

L'étape d'allocation, le cas échéant, de ressources supplémentaires à un mobile NRT consiste principalement à décider, périodiquement, s'il est utile de procéder à une augmentation des ressources qui lui sont allouées et à procéder, le cas échéant, à ladite modification.

L'étape d'allocation, le cas échéant, de ressources supplémentaires audit mobile de destination, est illustrée par la figure 1. Ladite étape est mise en route, suite à l'étape 2 de comparaison de la durée $T_v$ à ladite durée seuil $T_{vd}$, lorsque ladite durée $T_v$ est supérieure à ladite durée seuil $T_{vd}$.

Au cours de l'étape 6, la valeur du pseudo-débit du mobile NRT $DebitIB_i$ calculée à l'instant $T_i$ est comparée à la valeur seuil $DebitIB_a$.

Si $DebitIB_i$ est inférieur à $DebitIB_a$, on compare ensuite, au cours de l'étape 7, la durée $T_v$, calculée précédemment au même instant $T_i$, à la durée seuil $T_{va}$. Si $T_v$ est inférieure à $T_{va}$ les ressources allouées au mobile NRT ne sont pas modifiées. Dans le cas contraire, les ressources allouées au mobile NRT sont augmentées au cours de l'étape 8 et cela sous réserve qu'une telle augmentation soit possible.

Si $DebitIB_i$ est supérieur à $DebitIB_a$, les ressources allouées au mobile NRT sont augmentées au cours de l'étape 8 et cela sous réserve qu'une telle augmentation soit possible.

Au cours de l'étape 8 d'augmentation des ressources allouées, il est nécessaire de passer par un contrôle d'admission du mobile NRT car l'allocation de ressources supplémentaires n'est pas garantie.

On tente dans le mode de réalisation préféré de l'invention d'allouer comme on l'a vu précédemment le couple code/puissance correspondant au niveau de code supérieur. S'il ne reste pas assez de ressources, on maintient la ressource allouée à son niveau précédant.

Selon le mode de réalisation préféré de l'invention, les ressources allouées à un mobile NRT peuvent, ainsi que cela a été décrit précédemment, être diminuées ou être augmentées périodiquement. Les décisions sont basées sur l'état, en terme de remplissage, de la mémoire tampon associée audit mobile ainsi que sur la valeur du débit source dudit mobile, estimée en calculant le débit écoulé par intégration différentielle sur l'état de ladite mémoire tampon.

La prise en compte de l'état des mémoires tampons de transmission permet ainsi d'effectuer une allocation de ressources à chaque mobile NRT dynamique, efficace et « collant » réellement aux besoins de chacun des mobiles NRT.

Comme on l'a indiqué précédemment, l'invention s'applique en particulier, mais non exclusivement, à l'allocation de ressources radio aux différents utilisateurs de la ressource radio dans un réseau à noyau UMTS.

**Revendications**

1. Procédé d'allocation de ressources en code et en puissance à un mobile connecté, au cours duquel on analyse, à des instants donnés, les besoins du mobile et on augmente, diminue ou maintient, en fonction du résultat de ladite analyse, les ressources allouées au mobile, une mémoire tampon associée audit mobile étant chargée d'écouler les entités de trafic à destination dudit mobile, **caractérisé en ce que** pour analyser les besoins du mobile à un instant donné:

   - on recense la quantité d'entités de trafic présentes audit instant dans la mémoire tampon associée audit mobile;
   - on estime le débit du mobile à la source audit instant en déterminant le débit d'entités de trafic écoulées depuis la mémoire tampon à destination dudit mobile en fonction de la variation de la quantité d'entités de trafic recensée audit instant et lors de précédentes analyses des besoins du mobile.

**2.** Procédé selon la revendication 1, **caractérisé en ce que** le débit d'entités de trafic écoulées depuis la mémoire tampon à destination dudit mobile est déterminé par intégration différentielle sur les quantités d'entités de trafic présentes dans ladite mémoire tampon audit instant et lors des précédentes analyses des besoins du mobile.

**3.** Procédé selon l'une des revendications 1 ou 2, **caractérisé en ce que** l'analyse des besoins du mobile et la modification - augmentation, diminution - ou non, en fonction du résultat de ladite analyse, de l'allocation des ressources audit mobile sont réalisées périodiquement.

**4.** Procédé selon la revendication 3, **caractérisé en ce que** l'analyse des besoins du mobile à un instant Ti=i*T, T représentant la périodicité de l'analyse des besoins du mobile, comporte les étapes de :

- Calcul de la taille Li de la mémoire tampon associée au mobile en quantifiant le nombre d'entités de trafic qui y sont stockées audit instant $T_i$ ;
- Calcul d'une durée $T_v$ de vidage de la mémoire tampon à débit constant égal au débit nominal du canal par :

$$T_v = \frac{Li}{debit\_no\min al\_du\_canal} \; ;$$

- Calcul d'une quantité Gi : $G_i = \frac{\sum_{j=0}^{N-1} L_{i-j}}{N}$

où N représente la taille paramétrable de la fenêtre de calcul et $L_k$ la taille de la mémoire tampon à l'instant $T_k$;

- Calcul d'un pseudo-débit DebitIBi : $DebitIB_i = G_i - G_{i-N}$

**5.** Procédé selon la revendication 4, **caractérisé en ce qu'**on diminue l'allocation des ressources au mobile si la duré $T_v$ est inférieure à une durée seuil $T_{vd}$ et si le pseudo-débit $DebitIB_i$ est inférieur à un débit seuil $DebitIB_d$.

**6.** Procédé selon la revendication 5, **caractérisé en ce que** pour diminuer les ressources allouées au mobile, on lui attribue un couple code/puissance de niveau de code directement inférieur.

**7.** Procédé selon l'une des revendications 4 à 6, **caractérisé en ce que**, la duré $T_v$ étant supérieure à ladite durée seuil $T_{vd}$, on augmente les ressources allouées audit mobile si le pseudo-débit $DebitIB_i$, calculé à l'instant $T_i$ est supérieur à un débit seuil $DebitIB_a$, ou, si le pseudo-débit $DebitIB_i$, calculé à l'instant $T_i$ est inférieur au débit seuil $DebitIB_a$ et si la durée $T_v$ est supérieure à une durée seuil $T_{va}$.

**8.** Procédé selon la revendication 7, **caractérisé en ce que** pour augmenter les ressources allouées au mobile, on tente de lui attribuer un couple code/puissance de niveau de code directement supérieur et **en ce que**, s'il ne reste pas assez de ressources disponibles, on maintient les ressources allouées.

**9.** Procédé selon l'une des revendications précédentes, **caractérisé en ce qu'**il est appliqué à l'ensemble des mobiles connectés dans un système de télécommunication de troisième génération, notamment dans un réseau à coeur UMTS.

**Claims**

**1.** Method for allocating code and power resources to a connected mobile terminal, during which, at given instants, the needs of the mobile terminal are analysed and, depending on the result of the said analysis, the resources allocated to the mobile terminal are upgraded, downgraded or kept, a buffer memory associated with the said mobile terminal being responsible for passing the traffic entities to the said mobile terminal, **characterized in that** in order to analyse the needs of the mobile terminal at a given instant:

- the quantity of traffic entities present at the said instant in the buffer memory associated with the said mobile terminal is counted;
- the data rate of the mobile terminal from the source at the said instant is estimated by determining the data rate for traffic entities passed from the buffer memory to the said mobile terminal as a function of the variation in the quantity of traffic entities counted at the said instant and during previous analyses of the needs of the mobile terminal.

2. Method according to Claim 1, **characterized in that** the data rate for traffic entities passed from the buffer memory to the said mobile terminal is determined by differential integration on the quantities of traffic entities present in the said buffer memory at the said instant and during previous analyses of the needs of the mobile terminal.

3. Method according to either of Claims 1 and 2, **characterized in that** the analysis of the needs of the mobile terminal and the modification - upgrade, downgrade - if any, depending on the result of the said analysis, of the allocation of resources to the said mobile terminal are carried out periodically.

4. Method according to Claim 3, **characterized in that** the analysis of the needs of the mobile terminal at an instant $T_i = i*T$, where T represents the periodicity of the analysis of the needs of the mobile terminal, includes the steps of:

- calculation of the size $L_i$ of the buffer memory associated with the mobile terminal by quantifying the number of traffic entities stored therein at the said instant $T_i$;
- calculation of a time $T_v$ to empty the buffer memory at a constant data rate equal to the nominal data rate of the channel, using:

$$T_v = \frac{L_i}{nominal\_data\_rate\_of\_channel}$$

- calculation of a quantity $G_i$:

$$G_i = \frac{\sum_{j=0}^{N-1} L_{i-j}}{N}$$

where N represents the configurable size of the calculation window and $L_k$ represents the buffer memory size at the instant $T_k$;

- calculation of a pseudo data rate $DatarateIB_i$:

$$DatarateIB_i = G_i - G_{i-N}$$

5. Method according to Claim 4, **characterized in that** the allocation of resources to the mobile terminal is downgraded if the time $T_v$ is shorter than a threshold time $T_{vd}$ and if the pseudo data rate $DatarateIB_i$ is lower than a threshold data rate $DatarateIB_d$.

6. Method according to Claim 5, **characterized in that** in order to downgrade the resources allocated to the mobile terminal, a code/power pair of directly lower code level is assigned to it.

7. Method according to one of Claims 4. to 6, **characterized in that**, with the time $T_v$ being longer than the said threshold time $T_{vd}$, the resources allocated to the said mobile terminal are upgraded if the pseudo data rate $DatarateIB_i$, calculated at the instant $T_i$, is higher than a threshold data rate $DatarateIB_a$, or if the pseudo data rate $DatarateIB_i$, calculated at the instant $T_i$, is lower than the threshold data rate $DatarateIB_a$ and if the time $T_v$ is longer

than a threshold time $T_{va}$.

8. Method according to Claim 7, **characterized in that** in order to upgrade the resources allocated to the mobile terminal, an attempt is made to assign to it a code/power pair of directly higher code level and **in that**, if there are not enough resources available, the allocated resources are kept.

9. Method according to one of the preceding claims, **characterized in that** it is applied to all connected mobile terminals in a third generation telecommunication system, in particular a network with a UMTS core.

**Patentansprüche**

1. Zuteilungsverfahren für Ressourcen in Code und Leistung an ein verbundenes Mobiltelefon, bei dem, zu gegebenen Zeitpunkten, der Bedarf des Mobiltelefons analysiert wird und in Abhängigkeit vom Ergebnis der Analyse die dem Mobiltelefon zugeteilten Ressourcen erhöht, vermindert oder beibehalten werden, wobei ein dem Mobiltelefon zugeordneter Pufferspeicher dafür zuständig ist, die für das Mobiltelefon bestimmten Verkehrseinheiten auszustoßen, **dadurch gekennzeichnet, daß** zur Bedarfsanalyse des Mobiltelefons zu einem gegebenen Zeitpunkt:

- die Menge der Verkehrseinheiten erfaßt wird, die zu diesem Zeitpunkt in dem Pufferspeicher, der dem Mobiltelefon zugeordnet ist, vorhanden sind;
- der Durchsatz des Mobiltelefons an der Quelle zu diesem Zeitpunkt geschätzt wird, indem der Durchsatz an aus dem Pufferspeicher zum Mobiltelefon ausgestoßenen Verkehrseinheiten in Abhängigkeit von der Änderung der Menge der Verkehrseinheiten bestimmt wird, die zu diesem Zeitpunkt und bei vorhergehenden Bedarfsanalysen des Mobiltelefons erfaßt wurde.

2. Verfahren nach Anspruch 1, **dadurch gekennzeichnet, daß** der Durchsatz an aus dem Pufferspeicher zum Mobiltelefon ausgestoßenen Verkehrseinheiten durch differentielle Integration über die zu diesem Zeitpunkt und bei den vorhergehenden Bedarfsanalysen des Mobiltelefons im Pufferspeicher vorhandenen Mengen an Verkehrseinheiten bestimmt wird.

3. Verfahren nach einem der Ansprüche 1 oder 2, **dadurch gekennzeichnet, daß** die Bedarfsanalyse des Mobiltelefons und, in Abhängigkeit von den Ergebnissen der Analyse, die Veränderung - Erhöhung, Verminderung - oder Beibehaltung der Ressourcenzuteilung an das Mobiltelefon periodisch ausgeführt werden.

4. Verfahren nach Anspruch 3, **dadurch gekennzeichnet, daß** die Bedarfsanalyse des Mobiltelefons zu einem Zeitpunkt $Ti = i*T$, wobei T die Periode der Bedarfsanalyse des Mobiltelefons bezeichnet, folgende Phasen umfaßt:

- Berechnung der Größe Li des dem Mobiltelefon zugeordneten Pufferspeichers, indem die Anzahl der Verkehrseinheiten, die darin zu diesem Zeitpunkt Ti gespeichert sind, quantitativ erfaßt wird;
- Berechnung einer Zeitdauer $T_v$ zum Entleeren des Pufferspeichers bei konstantem Durchsatz, der gleich dem Nenndurchsatz des Kanals ist, durch:

$$T_v = \frac{Li}{Nenndurchsatz\_des\_Kanals}$$

- Berechnung einer Menge Gi: $G_i = \dfrac{\sum_{j=0}^{N-1} L_{i-j}}{N}$,

wobei N die parametrierbare Größe des Berechnungsfensters und $L_k$ die Größe des Pufferspeichers zum Zeitpunkt $T_k$ bezeichnet;

- Berechnung eines Pseudodurchsatzes DurchsatzIBi: $DurchsatzIB_i = G_i - G_{i-N}$.

**5.** Verfahren nach Anspruch 4, **dadurch gekennzeichnet, daß** die Ressourcenzuteilung an das Mobiltelefon vermindert wird, wenn die Zeitdauer $T_v$ kleiner ist als eine Schwellwertzeitdauer $T_{vd}$ und wenn der Pseudodurchsatz DurchsatzlB; kleiner ist als ein Schwellwertdurchsatz $DurchsatzlB_d$.

**6.** Verfahren nach Anspruch 5, **dadurch gekennzeichnet, daß** zur Verminderung der dem Mobiltelefon zugeteilten Ressourcen, diesem ein Code/Leistung-Paar mit direkt niedrigerer Codestufe zugewiesen wird.

**7.** Verfahren nach einem der Ansprüche 4 bis 6, **dadurch gekennzeichnet, daß**, wenn die Zeitdauer $T_v$ größer ist als die Schwellwertzeitdauer $T_{vd}$, die dem Mobiltelefon zugeteilten Ressourcen erhöht werden, wenn der zum Zeitpunkt $T_i$ berechnete Pseudodurchsatz $DurchsatzlB_i$ größer ist als ein Schwellwertdurchsatz $DurchsatzlB_a$ oder, wenn der zum Zeitpunkt $T_i$ berechnete Pseudodurchsatz $DurchsatziB_i$ kleiner als der Schwellwertdurchsatz $DurchsatzlB_a$ ist und wenn die Zeitdauer $T_v$ größer als eine Schwellwertzeitdauer $T_{va}$ ist.

**8.** Verfahren nach Anspruch 7, **dadurch gekennzeichnet, daß** zum Erhöhen der dem Mobiltelefon zugeteilten Ressourcen versucht wird, diesem ein Code/Leistung-Paar mit direkt höherer Codestufe zuzuweisen und **dadurch**, daß wenn nicht genügend verfügbare Ressourcen übrig geblieben sind, die zugeteilten Ressourcen beibehalten werden.

**9.** Verfahren nach einem der vorhergehenden Ansprüche, **dadurch gekennzeichnet, daß** es in einem Telekommunikationssystem der dritten Generation, insbesondere in einem Netz mit UMTS-Kern, auf die Gesamtheit der verbundenen Mobiltelefone angewendet wird.

**Ti**

Estimation de la durée $T_v$ de vidage
de la mémoire tampon

1

Estimation du pseudo débit DebitIBi
concernant l'état de la mémoire
tampon associée au mobile

2

$T_v > T_{vd}$     OUI

NON

3

DebitIBi > DebitIB$_d$   OUI

6

OUI   DebitIBi > DebitIB$_a$

NON

NON

7

OUI   $T_v > T_{va}$

Diminution des
ressources allouées

4

Augmentation des
ressources allouées

NON

8

i+1

## FIG.1